# EUROPEAN PATENT APPLICATION

(11) **EP 0 529 535 A2**
(43) Date of publication of application: **03.03.1993**
(21) Application number: 92114319.4
(22) Date of filing: 21.08.1992
(51) Int. Cl.: G06K 15/12, G06K 15/02

(54) **Electronic data and drive circuit for thermal printer**

(30) Priority: 23.08.1991 US 749008
(71) Applicant: EASTMAN KODAK COMPANY, Rochester, New York 14650-2201 (US)
(72) Inventor: Mackin, Thomas Andrew, c/o EASTMAN KODAK COMPANY, Rochester, New York 14650-2201 (US)
(74) Representative: Wagner, Karl H., Dipl.-Ing.

(57) **Abstract**

There is disclosed an electronic data and drive circuit for a multi-laser thermal printer. The circuit provides data and drive signals for the individual laser channels of the print head of the printer. Because the laser channels are closely spaced to obtain ultra-fine detail in a printed image (e.g., 1800 lines per inch), only a narrow portion of an image (termed a swath) is printed at a time. The printed image which finally results consists of multiple "swaths" printed closely alongside each other. To eliminate visually objectionable lines (i.e., printing artifacts) where one swath joins another in the printed image, a pair of "dummy" laser channels (0,n+1) in the print head are driven with combined or "AND"-ed data provided by the circuitry.

## Description

### Field of the Invention

This invention relates to a thermal printer, and more particularly, to an electronic drive circuit for such a printer which provides data and drive signals for a plurality of lasers simultaneously to print an image.

### Background of the Invention

One type of thermal printer employs a dye-donor element placed over a dye-receiver element. The two elements together are moved past a print head having a plurality of very small heat "sources". When a particular heating source is energized, thermal energy from it causes a small dot or pixel of dye to transfer from the dye donor element onto the receiver element. The density of each dye pixel is a function of the amount of energy delivered from the respective heating source of the print head to the dye donor element. The individual pixels are printed in accordance with image data; all of the dye pixels thus formed together define the image printed on the receiver element.

Because light from a laser can be focused to an ultrafine, intense spot of heat energy and can be modulated at very high speed, lasers (such as small, relatively inexpensive diode lasers), are now the preferred heating sources for printing the dye pixels in the more advanced thermal printers. But in the case where pixels are printed at very fine pitch on very closely spaced lines (e.g., 1800 lines per inch and 1800 pixels per inch), it becomes impracticable to provide an individual laser for each line across the width of a page being printed. For example, a 10 inch wide page requires 18,000 lasers, along with their respective drive circuits! On the other hand, using only one laser and scanning in sequence the lines across a page to print an image is a very much slower operation than when multiple lasers are used.

In U.S. Patent Application Serial No. 451,655, filed Dec. 18, 1989, entitled "Thermal Printer", and assigned to an assignee in common with the present patent application, there is disclosed a thermal printer employing a plurality of lasers for printing a like plurality of lines of print pixels at the same time. This thermal printer produces full color pictures printed by thermal dye transfer in accordance with electronic image data corresponding to the pixels of a master image. The pictures so produced have ultra-fine detail and faithful color rendition which rival, and in some instances exceed in visual quality, large photographic prints made by state-of-the-art photography. This new thermal printer is able to produce either continuous-tone or half-tone prints. In the continuous tone mode, the ultrafine printed pixels of colored dye have densities which vary over a continuous tone scale in accordance with the image data. On the other hand in the half-tone mode, the ultrafine print pixels which define the picture are formed by more or fewer micro-pixels of dye such that the pixels printed closely together appear to the eye as having greater or lesser density and thus simulate a continuous tone scale. Half-tone, offset printing is widely used for example, in printing and publishing. It is common practice in this and related industries first to obtain and visually inspect "proof" prints prior to production so that any visual blemishes, artifacts of the half-tone process, or other undesirable qualities in the "printed" pictures, (which would otherwise occur in production) can be corrected before production begins. In the past, the obtaining of these "proof" prints has involved considerable time delay and significant extra expense. This thermal printer, by virtue of its unique design and mode of operation is able to produce quickly (within minutes) an authentic half-tone printed image which (for all intents and purposes) is visually indistinguishable from the highest quality color image made by offset printing. And by comparison, the initial setup costs and processing times for the printing plates required in high quality offset printing are many times (e.g., hundreds) the costs and times required by this new thermal printer to produce "proof" prints of equal quality. This not only simplifies the publishing operation prior to production but helps a publisher improve the visual quality of the end product (e.g., an illustrated magazine).

The human eye is extremely sensitive to differences in tone scale, to apparent graininess, to color balance and registration, and to various other incidental defects (termed printing artifacts) in a picture which may occur as a result of the process by which the picture is reproduced. Thus it is highly desirable for a thermal printer such as described above, when used in critical applications, to be as free as possible from such printing artifacts.

The thermal printer described in the above-mentioned U.S. Patent Application has a rotating drum on which can be mounted a print receiving element with a dye donor element held closely on top of it. The two elements are in the form of thin flexible rectangular sheets of material mounted around the circumference of the drum. As the drum rotates, a thermal print head, with individual channels of laser light beams in closely spaced, ultra-fine light spots focused on the dye element, is moved in a lateral direction parallel to the axis of the drum. With each rotation of the drum, multiple lines (termed a "swath") of micro-pixels are printed on the receiving element in accordance with image data applied to the electronic driving circuits of the respective laser channels. There are as many image lines in a swath as there are laser channels (for example, 18 lines with a lateral spacing of 1800 lines per inch) and there are as many swaths as required to print an image of a given page width. It has been found that in the absence of corrective measures, where one swath ends and another begins as they are printed across the picture, there occur visually objectionable bands or seam lines which run the length of the picture and impair its quality. A reason for this is that the first and the last laser channels in the print head, which are the two outer channels of the head, are not "helped" in their printing action by a laser channel on both sides of these outer channels. Each of the inner channels, of course, is next to an active channel on both its right and left, but the two outer channels have an adjacent laser channel on one side only. As a result the lines of pixels printed by the outer laser channels do not receive as much thermal energy on average as do the inner lines, hence the outer lines are somewhat thinner and appear less dense. This results in visually undesirable "seam lines" (termed printing artifacts). A detailed explanation of these printing artifacts and their causes are given in the above-identified U.S. Patent Application.

An effective way to eliminate these "seam lines" is to provide two auxiliary or "dummy" laser channels so that every inner laser channel in the print head has on both sides of itself another laser channel. The two dummy outside channels print respective scan lines which provide for pre-heating and post-heating of adjacent inner scan lines such that the "seams" between successive swaths become invisible to the eye; the bands or seam lines which would otherwise be present as a visible artifact of printing are no longer present. The data printed by the dummy channels is artificially derived. In one very effective software algorithm the data for the dummy channels was derived as the "AND"-ed values of the actual image data printed by the first and the last of the inner laser channels. Thus if the first inner laser channel of the print head be designated "1" and the last designated "n", the actual image data that was printed by channel "n" of a first swath is "AND"-ed with the image data actually printed by channel "1" of the second swath. This "AND"-ed or combined data is then used to drive both dummy channels. It will be noted however that the image data of channel "n" of the first swath occurs before the image data of channel "1" of the second swath. Thus software management of both the actual and the "AND"-ed data to be printed by the laser channels is difficult and expensive due to the size of the data files involved (e.g., 200 megabytes) and the high speed at which data is suppled to the printer (e.g., 10 megabits/sec.). The present invention provides a highly effective and inexpensive solution to this problem.

### Summary of the Invention

In accordance with the present invention there is provided a simple and effective electronic circuit for supplying data and drive signals to all of the laser channels including the dummy laser channels in a multi-laser thermal printer. In addition to the already existing electronic image and processing drive circuitry of the printer, the novel circuit (circuitry) of the present invention comprises buffer means, "AND" gate means for "AND"ing the image data of an image line "n" of one swath with the image data of the line "1" of the next swath, and channel driver means for driving the two outside dummy channels (designated channel "0" and channel "n+1") with the "AND"-ed data. As a result, a finely detailed dye-transfer image printed swath-by-swath across a page width by this thermal printer and its electronic circuitry is substantially free of the visual seam lines or printing artifacts previously encountered.

View from another aspect, the present invention is directed to circuitry for a multi-laser thermal printer. The circuitry comprises an "n" number of image-printing channels, a first and second dummy laser channel, data interface means, and data combining means. The "n" number of image-printing laser channels are for printing in accordance with image data a like number "n" of closely spaced image lines along a portion or swath of the image, there being a plurality of the swaths printed side-by-side to form a complete image, the "n" number of closely spaced image lines printed by the image-printing laser channels forming each swath. The first dummy laser channel is on an outerside of the first image-printing laser channel, and the second dummy laser channel is on an outerside of the "n"-th image-printing laser channel. The data interface means supplies line image data to each of the "n" image-printing channels for the printing of a swath. The data combining means combines the line data for the first laser channel to be printed as line "1" of a given swath with the line data for the "n"-th laser channel printed as line "n" of the preceding swath. The data combining means applies the combined data to the first and second dummy laser channels such that the visible seam lines or printing artifacts between adjacent swaths are substantially eliminated.

Viewed from still another aspect, the present invention is direct to a thermal printer. The thermal printer comprises mounting means, a print head, data interface means, at least one dummy laser channel, and data combining means. The mounting means positions a dye donor element and a dye receiving element in image printing relation to each other. The print head is positioned for relative movement past said mounting means, the print head having a number of imaging laser channels "1" through "n" each focusing a very small spot of light energy onto the dye donor and receiving elements, the spots of light energy being closely spaced to print "n" lines of a portion or swath of an image on the receiving element, there being a plurality of swaths printed contiguously side-by-side to form a completed image. The data interface means supplies image data line-by-line to the imaging laser channels "1" through "n". The dummy laser channel is on an outerside of an imaging laser channel. The data combining means combines line data for the imaging laser channel "1" with line data for the imaging laser channel "n", the data combining means applying the combined data to the dummy laser channel such that visible seam lines between adjacent swaths are substantially eliminated.

Viewed from still another aspect, the present invention is directed to circuitry for a multi-laser thermal printer. The circuitry comprises "n" number of laser channels for printing "n" number of closely spaced image lines forming a portion or swath of the width of an image; two dummy laser channels on either side of the "n" laser channels; data interface means for supplying image data on-the-fly line-by-line "1" through "n" to the "n" laser channels respectively; and data combining means for "AND"-ing the line data for the "1st" line of a swath and the line data for the "n-th" line of the previous swath, the data combining means applying the "AND"-ed data to the dummy laser channels such that seam lines between the swaths of an image are substantially invisible to the eye.

A better understanding of the invention, together with its important advantages will best be gained from a study of the following description given in conjunction with the accompanying drawings and claims.

### Brief Description of the Drawings

FIG. 1 is a schematic representation of a thermal printer in which the present invention has utility;
FIG. 2 is a schematic block diagram of the electronic circuits and multiple laser channel print head of the printer of FIG. 1;
FIG. 3A is a schematic representation (not to scale) of the multiple print lines printed as sequential swaths by a thermal printer in accordance with the invention;
FIG. 3B shows how the individual swaths of FIG. 3A are blended into a continuous succession of swaths, without visual seam lines or printing artifacts, in accordance with invention; and
FIG. 4 shows an electronic data and drive circuit comprising a preferred embodiment of the present invention.

### Detailed Description

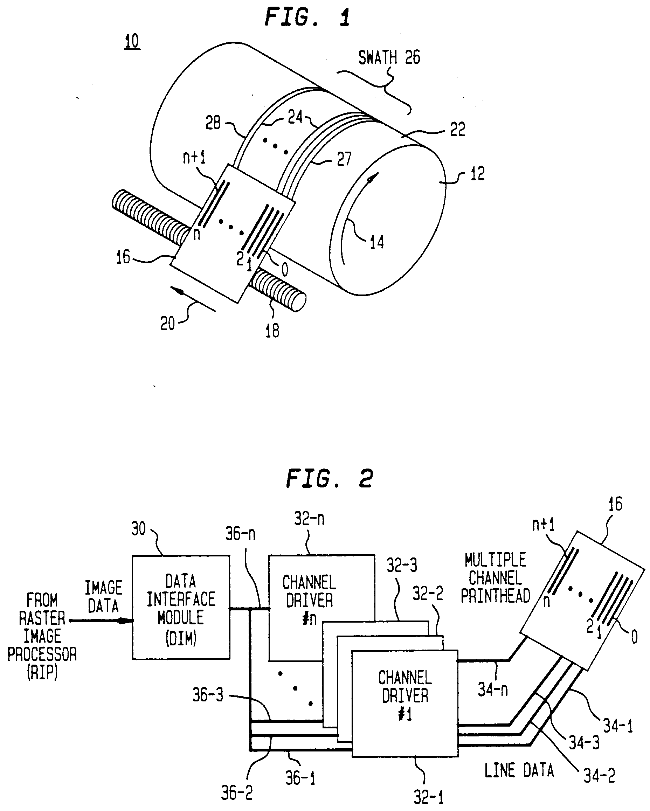

Referring now to FIG. 1, there is shown in schematic form elements of a thermal printer 10 in which the present invention has utility. These elements comprise a drum 12 mounted for rotation in the direction indicated by a curved arrow 14, on a frame (not shown). A thermal print head 16 is mounted on a feed screw 18 (also mounted on the frame) for lateral motion in the direction of an arrow 20 parallel to the cylindrical surface 22 of the drum 12. The rotation of drum 12 in the direction of the arrow 14 is termed the "fast scan" direction and the lateral movement of the print head 16 in the direction of the arrow 20 is termed the "slow scan" direction. The print head 16 contains a number of laser channels "1" through "n" and two outside or dummy channels "0" and "n+1". Each of the laser channels "0" through "n+1" provides a very small spot (e.g., about 20 microns dia.) of light energy focused on the dye donor element (not shown) on the drum 12. Further details of the print head 16 and the precise mounting of all of the laser channels "0" through "n+1" are given in the above identified U.S. Patent application to which the reader is referred.

As the print drum 12 rotates and the individual laser channels "1" through "n" are energized with print or line data corresponding to image data of a picture being printed, these respective laser channels print through the dye donor element (not shown) closely spaced lines of micro-pixels on a receiving element (not shown) mounted on the drum 12, as previously explained. These closely spaced image lines, indicated at 24, form what is termed a "swath". A single such swath 26 is shown for the sake of illustration in FIG. 1 greatly enlarged and not to scale. It is to be understood that the lines 24 of each swath 26 are very close together (e.g., 1800 lines per inch) and that there are as many swaths 26 contiguously side-by-side as required by the image being printed. The two outside "dummy" lines printed by the dummy laser channels "0" and "n+1" are indicated at 27 and 28, respectively. The effect of these "dummy" lines 27 and 28, and the elimination of visual seam lines between successive swaths 26 will be described shortly. It is to be further understood that as an image is rapidly printed along a swath 26 in the fast scan direction (arrow 14), the swath 26 shifts slowly laterally in the slow scan direction (arrow 20) because of the lateral motion of the print head 16 imparted by the feedscrew 18. At the end of a revolution of the drum 12, one swath 26 ends and another swath 26 begins, being precisely registered in position. Thus all of the swaths 26, when printing is finished, comprise a visually seamless image.

Referring now to FIG. 2, there are shown in schematic, block diagram form various electronic elements of the printer 10. These elements comprise a data interface module (DIM) 30, a plurality of channel drivers 32-1 through 32-n, and a plurality of data links 34-1 through 34-n connecting the channel drivers with the respective laser channels "1" through "n" of the laser head 16. Channel drivers for the dummy laser channels "0" and "n+1" are not shown here but are described in detail shortly. The data links 34-1 through 34-n are advantageously optical fibers as described in the above mentioned U.S. Patent application.

The DIM 30 receives image data from a raster image processor (RIP) (not shown) which converts continuous-tone image data at high speed and converts it on-the-fly to half-tone bit image data, which it supplies to the DIM 30. The DIM 30 in turn applies via the data busses 36-1 through 36-n the respective print data for each of the laser channel drivers 32-1 through 32-n. As was explained previously, the data to be supplied to dummy laser channels "1" and "n+1" is not image data, per se, but is artificially derived. It is expensive and cumbersome to derive this artificial data by software management of the operation of the RIP and the DIM 30, as was explained. However, in accordance with the present invention, this artificial data is easily and inexpensively derived and the dummy laser channels "0" and "1+n" driven by an electronic circuit which embodies the present invention and which is described hereinafter. The data and drives for the dummy laser channels "0" and "n+1" are not shown in FIG. 2.

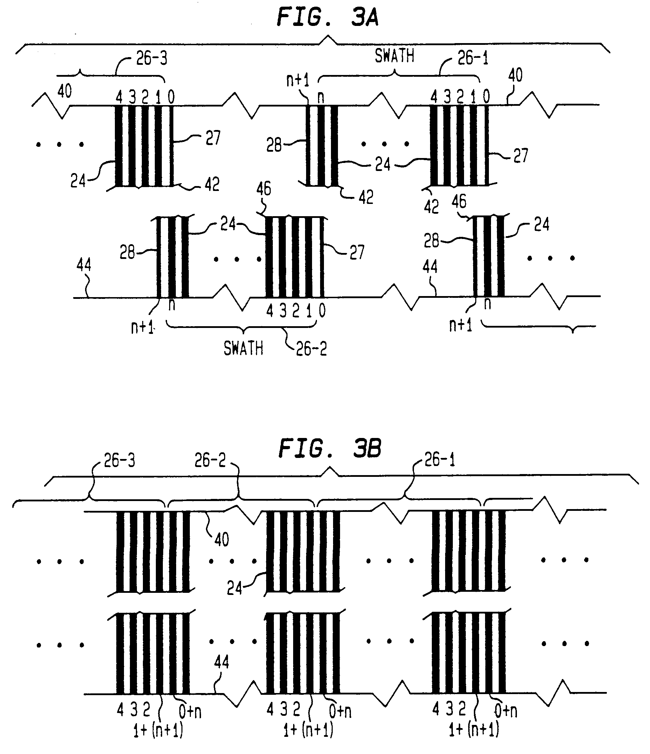

Referring now to FIG. 3A, there is schematically shown how the swaths 26, along with their respective image lines 24 and the dummy lines 27 and 28, are written side-by-side so that there is no visible seam line between the swaths. The swaths are shown here very greatly enlarged, not to scale, and partially broken away for the sake of illustration. It is to be understood that the image lines 24 (shown solid) respective to the channels "1" through "n", and here so identified, are actually a series of micro-pixels printed closely together along each line 24 in accordance with the line image print data supplied to each laser channel "1" through "n" by the DIM 30 (FIG. 2). Moreover, the lines 24 are actually so close together that the eye cannot see any "blank" or unprinted spaces between them. Dummy lines 27 and 28 have less printed density, as was explained previously, and are shown here as slightly narrower than the image lines 24. In the absence of the dummy lines 27 and 28 (lines "0" and "n+1") the image lines "1" and "n" would be less dense (in the illustration here they would be less thick). This would result in undesirable visual seam lines between the swaths, as explained above.

As seen at the upper right of FIG. 3A, the image lines 24 of a first swath 26-1 begin at an upper picture edge 40 and proceed vertically downward. The swath 26-1 is shown broken away along a break-line 42 for the sake of illustration, but it is to be understood that the swath 26-1 in fact extends downward to a lower picture edge 44. The distance between the upper and lower picture edges 40 and 44 may in fact be almost equal to the circumference of the print drum 12 (e.g., about 20 inches). To the left and below the portion of the swath 26-1 which is not broken away, is a second swath 26-2, the upper portion of which is shown broken away along a break-line 46. Thus it can be seen that the dummy line 27 (line "0") of the second swath 26-2 is printed on top of the last image line 24 (line "n") of the previous swath 26-1. Similarly, the first image line 24 (line "1") of the second swath 26-2 is printed on top of the dummy line 28 (line "n+1") of the first swath 26-1. Similarly, the last image line 24 (line "n") and dummy line 28 (line "n+1") of the second swath 26-2 are over-printed by the respective lines of a third swath 26-3, and so on. The swath 26-1 is shown as being preceded by an earlier swath (only part of which is shown). However where a swath is the first or initial one printed, the first dummy line 27 (line "0") of the first-to-be-printed swath is not printed. This will be explained shortly.

Referring now to FIG. 3B, the sequential swaths 26-1, 26-2 and 26-3 are shown here with their initial and ending image lines 24 (lines "1" and "n") now combined with their respective dummy lines 27 and 28. This is indicated by the lines "0" and "n" lying on top of each other, and the lines "1" and "n+1" lying on top of each other. The net effect of this is to eliminate visual "seam lines" between the adjacent swaths. To emphasize this result all of the lines of the swaths 26-1, 26-2 and 26-3 are shown here as having equal densities and spacings. Only the beginning upper and ending lower portions of the contiguous swaths 26 are shown in FIG. 3B; the center portions are shown broken away because of the extreme length of the swaths relative to the scale of the illustration. If the dummy lines 27 and 28 (lines "0" and "n+1") were not present, that is, not combined with image lines "n" and "1" respectively, as shown here in FIG. 3B, the image lines "n" and "1" would be less dense, and hence visually objectionable seam lines (printing artifacts) between the swaths 26 would occur.

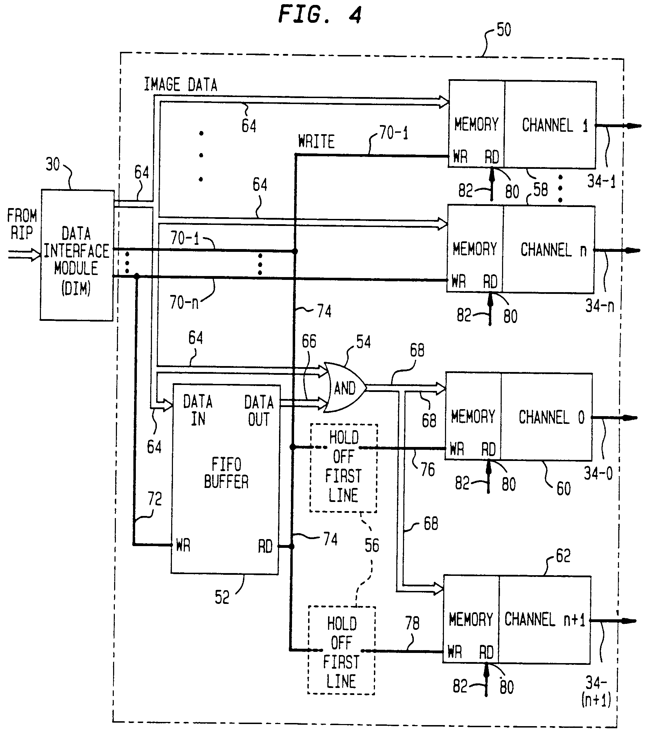

Referring now to FIG. 4, there are shown in block diagram elements of an electronic data and drive circuit (also denoted as circuitry) 50 (shown within a dashed line rectangle) for the thermal printer 10, in accordance with a preferred embodiment of the invention. The circuit 50 comprises a first-in-first-out (FIFO) buffer 52, an AND gate 54, two "hold off first line" units 56 (shown within dashed-line boxes), a plurality of memory/channel modules 58 for the respective laser channels "1" through "n", a memory/channel module 60 for the dummy laser channel "0", and a memory channel module 62 for the dummy laser channel "n+1". Each memory channel module 58 includes in addition to its data memory, as indicated, a respective power driver and laser (both not being shown) which are connected by one of the data links 34-1 through 34-n to the print head 16 (see FIG. 2). The memory/channel module 60 is connected to the dummy laser channel "0" of the head 16 by a link 34-0, and the memory/channel module 62 is connected to the dummy laser channel "n+1" by a data link 34(n+1). The modules 60 and 62 may be identical to the modules 58, but are driven by different data, as will now be explained.

The circuit 50 is supplied with line or image data via a buss 64 from the DIM 30. This buss 64 is connected to the respective inputs of the memories of the modules 58, to the input of the FIFO buffer 52 and to an upper input of the AND gate 54. A line of data previously stored in the FIFO buffer 52 (when a "read" command is given, as will be explained) is applied via a buss 66 from the output of the buffer 52 to a lower input of the AND gate 54. The "AND"-ed data from the output of the AND gate 54 are applied via a buss 68 to the memories of both the dummy laser memory/channel modules 60 and 62. Data "write" instructions from the DIM 30 are applied via the respective leads 70-1 through 70-n to the memories of the memory/channel modules 58 for the laser channels "1" through "n". Similarly, a data "write" instruction, corresponding to the "write" instruction to the laser channel "n" on the lead 70-n, is applied via a lead 72 to the "write" input of the FIFO buffer 52. Likewise, a "write" instruction corresponding to that applied via the lead 70-1 to the memory/channel "1" module 58 is also applied via a lead 74 to the two hold-off units 56, and to a "read" input of the FIFO buffer 52.

The hold-off units 56 interrupt the "write" signal applied to them via the lead 74 only during start of image printing when the first line of the first-to-be-printed swath 26 is being written into the memory of channel "1" module 58. Thereafter during the printing of all subsequent swaths, the "write" instruction on lead 74 passes through the hold-off units 56 to the leads 76 and 78 and to the "write" inputs of the respective memory portions of the channel "0" module 60 and the memory/channel "n+1" module 62. Since no line data exists for a swath prior to the first-to-be-printed swath, dummy laser channels "0" and "n+1" of that first swath print zeroes. Thereafter these dummy channels "0" and "n+1" print the AND-ed data from the AND gate 54. This occurs as follows.

Each line of image data from the DIM 30 is loaded sequentially via the buss 64 into the memory portion of a respective memory/channel module 58. This occurs when a corresponding "write" instruction from the DIM 30 is applied via one of the leads 70-1 through 70-n to that particular memory/channel module 58. Thus, when a line of data for the memory/channel "1" module 58 is available from the DIM 30, the DIM 30 applies to the lead 70-1 a "write" signal which instructs the memory of memory/channel "1" module 58 to accept and store that data. Thus the memories of channels "1" through "n" of the modules 58 are loaded with the image data for the respective image lines 24 of the next swath 26 to be printed. At the same time that the image data for the channel "n" module 58 is being loaded into its memory under instruction of a "write" signal on the lead 70-n, this same data and the corresponding "write" signal are applied via the buss 64 and the "write" lead 72 to the FIFO buffer 52. Thus a line of data corresponding to channel "n" is stored in the buffer 52 (this buffer stores only channel "n" line data). When the next line of image data (line "1") from the DIM 30 is applied via the buss 64 to the memory/channel "1" module 58 (preparing for the next swath 26 to be printed), these same line "1" data is also applied to the upper input of the AND gate 52 via the buss 64. When this line "1" of data for the memory/channel "1" module 58 is being loaded under instruction of a "write" signal on the lead 70-1, this same "write" signal is applied via the lead 74 to the "read" input of the FIFO buffer 52. Also this "write" signal is applied through the hold-off units 56 via the leads 76 and 78 (as explained above, after the first line of the first-to-be-printed swath the hold-off units 56 no longer interrupt the "write" signals to the leads 76 and 78) to the respective memory portions of the memory/channel "0" module 60 and the memory/channel "n+1" module 62. As mentioned earlier, a "write" signal on lead 74 which is applied to the "read" input of the FIFO buffer 52 causes the buffer to output its stored data via the buss 66 to the lower input of the AND gate 54. Thus a present line of channel "1" data, and a stored line of the previous channel "n" data are "AND"ed by the AND gate 54. This "AND"-ed data is applied via the buss 68 and loaded into the respective memories of the memory/channel "0" module 60 and the memory/channel "n+1" module 62 for the dummy lasers.

Each of the memory/channel modules 58,60 and 62 has a "read" input 80. When these memory/channel modules are all loaded with the respective line data to be printed as the next swath 26, the DIM 30 applies simultaneously to each of these "read" inputs 80 a print-initiate signal, indicated by the respective arrows 82. This initiates the printing action of the respective laser channels "0", "1" through "n", and "n+1" of the print head 16. This causes the printing of the lines 24 of a swath 26 and the dummy lines 27 and 28 (see FIG. 3A). It will be understood that the data printed by both of the dummy laser channels "0" and "n+1" is the "AND"-ed sum of the data of the line "1" of a given swath 26 and the data of the line "n" of the previous swath 26 (except initially in the single case of the first-to-be-printed swath 26, as explained above). The "AND"-ed data for the dummy lines 27 and 28 are generated "on-the-fly", (e.g.., in real time) by the circuit 50 which is provided in accordance with the invention. There is no need for modifications to the DIM 30 or for expensive and cumbersome software management of the RIP or of the DIM 30. The FIFO buffer 52 provided in the circuit 50 need only store a single line of image data (line "n"). This FIFO buffer 52 may be substantially identical to a memory portion of a memory/channel module 58, for example. The power used to drive the dummy laser channels "0" and "n+1" may be set at a value less than the print power used to drive laser channels "1" through "n" (e.g., about 40% of the print power). Thus the visual intensity of the dummy lines 27 and 28 can be adjusted for best effect.

It is to be understood that the embodiment of an electrical data and drive circuit for a thermal printer described herein is illustrative of the general principles of the invention. Modifications may readily be devised by those skilled in the art without departing from the spirit and scope of the invention. For example, the invention is not limited to a particular number of laser channels or to a particular pixel count per inch or line spacing, or image size.
The following summarizing language could also form the basis of an independent claim:
Circuitry for a multi-laser thermal printer comprising:
an "n" number of image-printing laser channels for printing in accordance with image data;
dummy laser channel means; and
data interface means for supplying image data to each of the "n" image-printing channels.

## Claims

1. Circuitry for a multi-laser thermal printer comprising:
an "n" number of image-printing laser channels for printing in accordance with image data a like number "n" of closely spaced image lines along a portion or swath of the image, there being a plurality of the swaths printed side-by-side to form a complete image, the "n" number of closely spaced image lines printed by the image-printing laser channels forming each swath;
a first and a second dummy laser channel, the first dummy laser channel being on an outerside of the first image-printing laser channel, and the second dummy laser channel being on an outerside of the "n"-th image-printing laser channel;
data interface means for supplying line image data to each of the "n" image-printing channels for the printing of a swath; and
data combining means for combining the line data for the first laser channel to be printed as line "1" of a given swath with the line data for the "n"-th laser channel printed as line "n" of the preceding swath, the data combining means applying the combined data to the first and second dummy laser channels such that the visible seam lines or printing artifacts between adjacent swaths are substantially eliminated.

2. The circuitry of claim 1 wherein the data combining means comprises:
a first-in first-out memory buffer; and
an AND gate which is supplied with data from the memory buffer and the data interface means such that the data applied to the first and second dummy lasers is the "AND"-ed sum of data.

3. The circuitry of claim 1 wherein the dummy laser channels are driven at a power level less than the power level of the "n" image-printing laser channels

4. The circuitry of claim 2 wherein the data interface means supplies image data on-the-fly at high speed to the "n" image printing laser channels and to the data combining means such that cumbersome additional software management of the data interface means is avoided.

5. The circuitry of claim 2 in further combination with hold-off means for causing the dummy laser channels to print zeroes for the first-to-be-printed swath, and for thereafter permitting the dummy laser channels to print the "AND"-ed data for all of the remaining swaths.

6. A thermal printer comprising:
mounting means to position a dye donor element and a dye receiving element in image printing relation to each other;
a print head positioned for relative movement past said mounting means, the print head having a number of imaging laser channels "1" through "n" each focusing a very small spot of light energy onto the dye donor and receiving elements, the spots of light energy being closely spaced to print "n" lines of a portion or swath of an image on the receiving element, there being a plurality of swaths printed contiguously side-by-side to form a completed image;
data interface means for supplying image data line-by-line to the imaging laser channels "1" through "n";
at least one dummy laser channel, the dummy laser channel being on the outerside of an imaging laser channel; and
data combining means for combining line data for the imaging laser channel "1" with line data for the imaging laser channel "n", the data combining means applying the combined data to the dummy laser channel such that visible seam lines between adjacent swaths are substantially eliminated.

7. The thermal printer of claim 6 wherein there are two dummy laser channels positioned on outer sides of the outer most of the imaging laser channels "1" through "n".

8. The thermal printer of claim 7 wherein the data combining means comprises:
a first-in first-out memory buffer; and
an AND gate which is supplied with data from both the memory buffer and the data interface means such that the data applied to the two dummy lasers is the "AND"-ed sum of line data.

9. The thermal printer of claim 8 wherein the imaging laser channels "1" through "n" print image lines at a pitch of about 1800 lines per inch, the data of each line is printed at a pixel count of about 1800 pixels per inch, and the dummy laser channels print lines of "AND"-ed data at a power level substantially less than the power level of the imaging laser channels "1" through "n".

10. Circuitry for a multi-laser thermal printer comprising:
"n" number of laser channels for printing "n" number of closely spaced image lines forming a portion or swath of the width of an image;
two dummy laser channels on either side of the "n" laser channels;
data interface means for supplying image data on-the-fly line-by-line "1" through "n" to the "n" laser channels respectively; and
data combining means for "AND"-ing the line data for the "1st" line of a swath and the line data for the "n-th" line of the previous swath, the data combining means applying the "AND"-ed data to the dummy laser channels such that seam lines between the swaths of an image are substantially invisible to the eye.

11. The circuitry of claim 10 wherein the data combining means further comprises a first-in first-out memory buffer for storing the "n-th" line data of a previous swath; the "AND"-ing means combining the line data of the "1st" line of a swath, with the stored "n" data of the "n-th" line of the previous swath.
